Europäisches Patentamt

European Patent Office

Office européen des brevets

(19)

(11) Veröffentlichungsnummer: **0 168 764**
**B1**

(12) **EUROPÄISCHE PATENTSCHRIFT**

(45) Veröffentlichungstag der Patentschrift:
**31.01.90**

(21) Anmeldenummer: **85108570.4**

(22) Anmeldetag: **10.07.85**

(51) Int. Cl.⁴: **G 01 B 3/00**, G 01 B 3/14,
B 21 D 9/03

(54) **Bausatz zum Herstellen einer Montagelehre für Rohrleitungen insbesondere Rohrleitungen für hydraulische oder pneumatische Schalt- bzw. Arbeitskreise.**

(30) Priorität: **14.07.84 DE 3426024**

(43) Veröffentlichungstag der Anmeldung:
**22.01.86 Patentblatt 86/4**

(45) Bekanntmachung des Hinweises auf die Patenterteilung:
**31.01.90 Patentblatt 90/5**

(84) Benannte Vertragsstaaten:
**BE CH FR GB IT LI NL SE**

(56) Entgegenhaltungen:
**DE-A- 1 527 318**
**DE-A- 1 552 989**
**DE-A- 2 142 255**
**DE-B- 2 725 113**
**GB-A- 1 505 258**

(73) Patentinhaber: **Merkt, Robert, Am Sportplatz,
D-5441 Beli (DE)**

(72) Erfinder: **Merkt, Robert, Am Sportplatz, D-5441 Bell (DE)**

(74) Vertreter: **Hennig, Peter, Rheinstrasse 23,
D-5400 Koblenz (DE)**

## Beschreibung

Die Erfindung betrifft einen Bausatz zum Herstellen einer Montagelehre für Rohrleitungen, insbesondere Rohrleitungen für hydraulische oder pneumatische Schalt- bzw. Arbeitskreise.

Auf vielen Gebieten der Technik ist es heutzutage üblich, maschinelle Einrichtungen – wozu auch Steuereinrichtungen gehören – mit einem gasförmigen oder flüssigen Druckmittel zu betreiben. Insbesondere werden als Druckmittel hierbei Luft oder geeignete Hydraulikflüssigkeiten verwendet. Seit langem bekannte Einsatzgebiete für druckmittelbetriebene Steuer- oder Arbeitskreise sind z.B. die Fahrzeugtechnik, insbesondere bei den Last- und Arbeitsfahrzeugen, sowie ferner Be- und Verarbeitungsmaschinen unterschiedlicher Art.

Beim Aufbau derartiger pneumatischer oder hydraulischer Steuer-, Schalt- bzw. Arbeitskreise oder Arbeitsstrecken ist es aus technischen, nicht zuletzt aber auch aus ästhetischen Gründen erforderlich, die Rohrleitungen für das Druckmittel an verschiedene äußere Gegebenheiten wie z.B. den Verlauf benachbarter Maschinen- oder Einrichtungsteile in gewissem Maß anzupassen. Beim Aufbau solcher druckmittelbetriebener Schalt- oder Arbeitskreise geschieht dies dadurch, daß genügend lange Rohrleitungen in ständigem Vergleich mit den betreffenden Konturen des zu überbrückenden Bereiches der Maschine, Einrichtungen oder dgl. je für sich durch Biegen verformt werden, um den gewünschten Verlauf der Rohrleitung in bestmöglicher Weise zu erhalten. Für derartige Arbeiten ist erhebliche Übung und Erfahrung notwendig und im übrigen beanspruchen derartige Arbeiten beträchtliche Zeit. Im Fall komplizierter Verläufe von Rohrleitungen, insbesondere von Verläufen in drei Dimensionen, wird eben gerade wegen solcher Kompliziertheit oft dazu übergegangen, an sich grundsätzlich einteilig ausführbare Rohrleitungen, z.B. zwischen einem Steuer- und einem Arbeitsmittel, mehrteilig auszuführen und die einzelnen Teile über Verbindungsmittel nachträglich wieder miteinander zu verbinden. Damit wird der Aufbau solcher druckmittelbetriebener Systeme weiter verteuert und außerdem ergeben solche an sich unnötige Verbindungsstellen zusätzliche Fehlermöglichkeiten.

Die GB-A-1 505 258 beschreibt eine Vorrichtung, mit deren Hilfe es möglich ist, bereits entsprechend einem vorgegebenen Verlauf im Raum gebogene Rohrleitungsstücke bezüglich der relativen Lage einiger willkürlich herausgegriffener Bereiche des Rohrleitungsstückes zueinander mit Hilfe mechanischer Mittel zu registrieren bzw. aufzuzeichnen und weitere, entsprechend zu formende Rohrleitungsstücke bezüglich ihrer Form- und Maßhaltigkeit zu prüfen. Diese Vorrichtung ist jedoch nicht geeignet, im direkten Einsatz an einer Be- oder Verarbeitungsmaschine oder einem Last- oder Arbeitsfahrzeug den oft komplizierten, meist in allen drei Dimensionen liegenden Verlauf eines Rohrleitungsstückes noch nicht bekannter Länge überhaupt erst – und sei es zunächst probeweise – zu erarbeiten.

Die DE-A-1 527 318 und die DE-A-1 552 989 beschreiben sogenannte Rohrbiegedorne. Derartige Rohrbiegedorne sind Werkzeuge, die vor Beginn eines Biegevorganges über die gesamte zu biegende Länge eines Rohres hinweg in dieses eingeführt werden, um das Rohr oder Rohrstück während des Biegevorganges von innen heraus so zu stützen, daß ein Flachdrücken oder ein Zusammendrücken des Rohres verhindert wird. Nach erfolgtem Biegevorgang wird das Werkzeug dann aus dem gebogenen Rohr oder Rohrstücke wieder herausgezogen. Die einzelnen Gelenkglieder derartiger Rohrbiegedorne sind gegeneinander in einem gewissen Ausmaß vollkommen frei drehbar und können Rollbewegungen vollführen, so daß ein Rohr oder Rohrstück unter Zuhilfenahme eines derartigen Rohrbiegedornes in die gewünschte Kurvenform gebogen werden kann. Um nach erfolgtem Biegevorgang ein Herausziehen – zumeist unter Zuhilfenahme hydraulisch arbeitender Hilfsmittel – des Rohrbiegedornes aus dem gebogenen Rohr zu erleichtern und insbesondere auch den unvermeidbaren Verschleiß auf ein Minimum zu begrenzen, weisen die einzelnen Gelenkstücke des Rohrbiegedornes aus Stahl bestehende, gehärtete Ringe auf, die überdies zumeist noch hartverchromt sind. – Zum Aufbau einer Lehre – also zum Herstellen eines räumlichen Musters für eine erst noch zu biegende Rohrleitung zum Zweck der exakten Längenbemessung eines entsprechenden Rohrstückes und Festlegung der Biegestellen – sind solche Rohrbiegedorne schon allein wegen ihren frei gegeneinander rotierbaren oder beweglichen Kugeln bzw. Gelenkgliedern nicht verwendbar.

Der vorliegenden Erfindung liegt die Aufgabe zugrunde, den Aufbau auch komplizierter Rohrleitungssysteme für druckmittelbetriebene Schalt- bzw. Arbeitskreise zu erleichtern und zu verbessern im Hinblick auf geringeren Aufwand an Zeit und Material, insbesondere im Hinblick auf eine technisch einfache und auch ästhetische Ausführung solcher Rohrleitungssysteme.

Zur Lösung dieser Aufgabe wird erfindungsgemäß ein Bausatz zum Herstellen einer Montagelehre für Rohrleitungen, insbesondere Rohrleitungen für hydraulische oder pneumatische Schalt- bzw. Arbeitskreise vorgeschlagen, der zunächst gekennzeichnet ist durch eine Mehrzahl von im Verhältnis zur Länge kurzen, miteinander verbundenen oder verbindbaren Gelenkgliedern, von denen benachbarte Gelenkglieder um einen gemeinsamen geometrischen Drehpunkt jeweils innerhalb eines vorbestimmten Raumwinkels gegeneinander verstellbar und durch Klemmung in jeder möglichen relativen Position zueinander feststellbar sind, der weiterhin gekennzeichnet ist durch den Gelenkgliedern zugeordnete, mit diesen verbundene oder verbindbare Endstücke, die mit Verbindungsmitteln für Stabglieder versehen sind, und der schließlich eine im Verhältnis zum Durchmesser um ein mehrfaches größere Länge ausgeführte Stabglieder aufweist, die mit mit den Verbindungsmitteln an den Endstücken korrespondierenden Verbindungsmitteln versehen sind.

Mit Hilfe des erfindungsgemäß vorgeschlagenen Bausatzes ist es nun möglich, eine Montagelehre für Rohrleitungen druckmittelbetriebener Schalt- und Arbeitskreise in verhältnismäßig kurzer Zeit und auf einfachste Weise herzustellen, die allen Bedürfnissen der Praxis gerecht wird und die Bearbeitung von derartigen Rohrleitungen in einer Weise erlaubt, die bestmöglich den jeweils gegebenen technischen bzw. räumlichen, aber auch ästhetischen Erfordernissen gerecht werden. Dazu ist es lediglich notwendig, von einem gewünschten Punkt an der betreffenden Maschine oder dgl. ausgehend flexible und starre Glieder, nämlich Gelenkglieder sowie Endstücke und Stabglieder in entsprechender Anzahl bzw. Länge zu kombinieren entsprechend dem gewünschten Verlauf der danach zu fertigenden und einzusetzenden Rohrleitung. Die gestreckte Länge einer auf diese Art und Weise aufgebauten Montagelehre kann durchaus der üblichen, im Handel befindlichen maximalen Länge derartiger Rohrleitungen von sechs Metern entsprechen. – Die zusammensteckbaren und sich durch entsprechende Klemmung in einer vorgegebenen Position selbst haltenden Gelenkglieder können zu entsprechenden Viertel- oder auch Halbkreisen aufgebaut werden mit einem minimalen mittleren Radius von beispielsweise fünf Zentimetern.

Nach Fertigstellung der Montagelehre braucht diese dann nur noch gestreckt zu werden, damit Rohrleitung entsprechender Länge auf genau das betreffende Längenmaß der Montagelehre zugeschnitten werden kann. Die Endstücke der in der jeweiligen Montagelehre enthaltenen Gelenkgliederkettenbereiche markieren im übrigen dann exakt die Bereiche der betreffenden Rohrleitung, die gekrümmt auszuführen wären.

In vorteilhafter weiterer Ausgestaltung der Erfindung wird nach Anspruch 2 vorgeschlagen, daß die Stabglieder aus zwei teleskopartig ineinandergreifenden Teilen bestehen, die mittels einer Klemmeinrichtung in verschiedenen möglichen Positionen gegeneinander feststellbar sind. Hierdurch ist es möglich, die Länge der geradlinigen Bereiche der Montagelehre exakt auf das gewünschte Maß einzustellen. In weiterer Ausgestaltung des Vorschlages nach Anspruch 2 besteht eine zweckmäßige weitere Ausgestaltung darin, daß die zweiteiligen Stabglieder aus einem stift- und einem hülsenförmigen Teil bestehen und daß zum gegenseitigen Feststellen von stiftförmigem und hülsenförmigem Teil auf dem hülsenförmigen Teil eine am stiftförmigen Teil benachbarten Ende befindliche Klemmutter auf dem hülsenförmigen Teil vorgesehen ist, der ein entsprechender, mit wenigstens einem in axialer Richtung verlaufenden Längsschlitz versehener Gewindebereich zugeordnet ist. Diese Ausführungsform ist mit verhältnismäßig geringen Kosten herstellbar und ermöglicht leichtes und schnelles Verstellen der Länge des Stabgliedes über einen relativ großen Längenbereich hinweg.

Zur Definition eines minimalen Krümmungsradius einer Gelenkgliederkette und auch zur Begrenzung der möglichen Verstellung benachbarter Gelenkglieder gegeneinander weisen die Gelenkglieder gemäß Anspruch 4 Kugelzapfen und Kugelpfanne auf, wobei zur vorbestimmten Begrenzung des möglichen Verstellwinkels dem Begrenzungsrand der Kugelpfanne eine umlaufende Schulter am Kugelzapfen zugeordnet ist.

Damit eine unter Verwendung der Gelenkglieder hergestellte Gelenkgliederkette einen im Bereich der Verstellmöglichkeiten liegenden Verlauf für die Zeit der Herstellung der Montagelehre beibehalten kann, schlägt Anspruch 5 vor, daß die Kugelpfanne eines Gelenkgliedes unter einer gewissen Spannung auf dem Kugelzapfen des benachbarten Gelenkgliedes aufsitzt.

Als Verbindungsmittel für Stabglieder und Endstücke sind entsprechend dem Vorschlag nach Anspruch 6 Gewindezapfen und Gewindebohrungen vorgesehen.

Bevorzugt wird der erfindungsgemäße Bausatz gemäß Anspruch 7 aus einem geeigneten Kunststoff gefertigt, vorzugsweise aus Polyamid.

Im übrigen kann die im Zusammenhang mit dem Vorschlag nach Anspruch 5 vorgesehene Lösung weiter dadurch verbessert werden, daß Kugelzapfen und/oder Kugelpfanne der Gelenkglieder geschlitzt ausgeführt sind, wie Anspruch 8 angibt.

Anhand der Figuren 1 bis 4 wird die Erfindung im folgenden an einem Ausführungsbeispiel noch weiter erläutert.

Es zeigen

Figur 1 eine aus Gelenkgliedern hergestellte Gelenkgliederkette,

Figur 2a bis g verschiedene Stabglieder unterschiedlicher Länge und teilweise mit verstellbarer Länge,

Figur 3 die Gelenkgliederkette nach Figur 1 in größerem Maßstab zusammen mit an den Endstücken befestigten Stabgliedern und

Figur 4 eine aus den Gelenkgliedern und den Stabgliedern nach den Figuren 1 und 2 hergestellte Montagelehre zusammen mit einer danach zu bemessenden Rohrleitung.

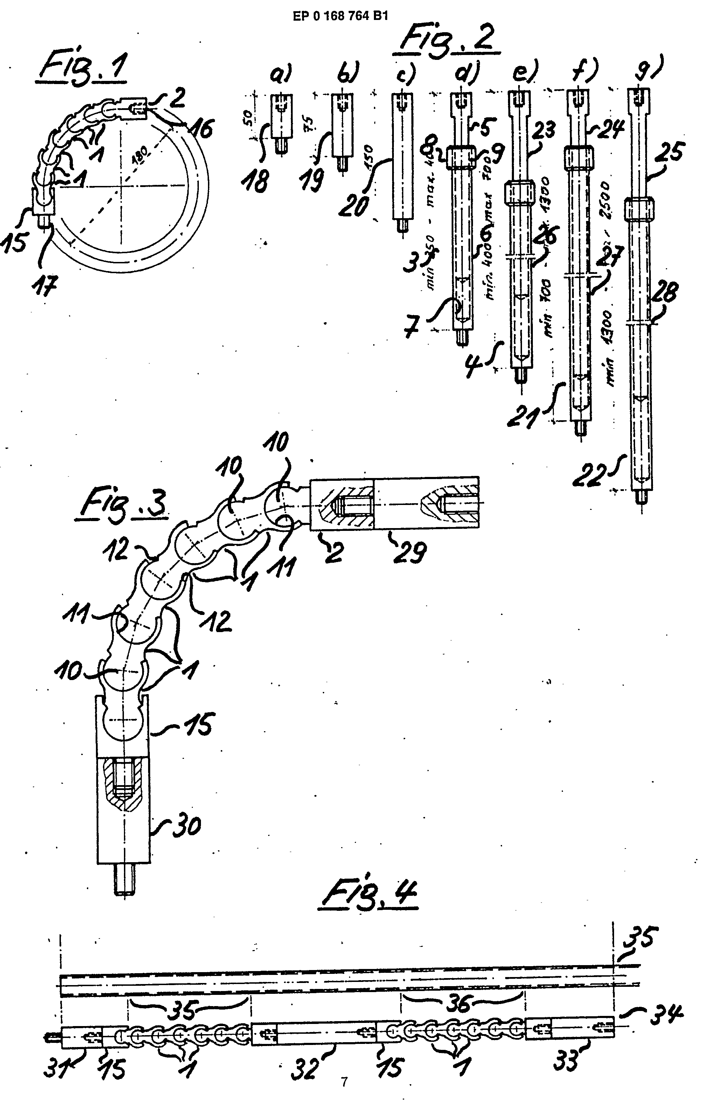

Figur 1 zeigt Gelenkglieder 1, die zu einer einen Viertelkreis umschließenden Gelenkgliederkette zusammengesteckt sind. Die beiden Enden der aus den Gelenkgliedern 1 bestehenden Gelenkgliederkette sind mit Endstücken 2 bzw. 15 abgeschlossen. Im Endstück 2 befindet sich eine Gewindebohrung 16, am Endstück 15 befindet sich ein Gewindezapfen 17.

Figur 2a bis c zeigt in der Länge unveränderbare Stabglieder 18, 19 und 20 sowie in der Länge veränderbare, zweiteilige Stabglieder 3, 4, 21 und 22. Die vorerwähnten Stabglieder sind ebenfalls mit nicht näher bezeichneten Gewindebohrungen bzw. Gewindezapfen versehen, die mit den oben genannten Gewindebohrungen bzw. Gewindezapfen 15 bzw. 17 korrespondieren.

Die Stabglieder 3, 4 und 21, 22 bestehen aus einem stiftförmigen Teil 5, 23, 24 bzw. 25 und einem hülsenförmigen Teil 6, 26, 27 bzw. 28.

Die in Figur 3 in größerem Maßstab dargestellte Gelenkgliederkette nach Figur 1, die aus Gelenkgliedern 1 mit Endstücken 2 und 15 besteht, weist im übrigen noch – verhältnismäßig kurze – in der Länge unveränderbare Stabglieder 29 bzw. 30 auf, die mittels nicht näher bezeichnetem Gewindezapfen und Gewindebohrung fest mit dem betreffenden Endstück (Endstück 29 bzw. 30) lösbar verbunden sind.

Die Gelenkglieder 1 weisen an einem Ende einen Kugelzapfen 10 und am anderen Ende eine Kugelpfanne 11 auf. Die Kugelpfanne 11 eines Gelenkgliedes 1 ist auf den Kugelzapfen 10 eines weiteren Gelenkgliedes 1 aufsteckbar, wobei die Kugelpfanne unter einer gewissen Pressung am Kugelzapfen des betreffenden Gelenkgliedes 1 anliegt. Die Gelenkglieder sind dabei zweckmäßig aus Kunststoff, insbesondere aus Polyamid hergestellt. Weiterhin kann es in diesem Zusammenhang zweckmäßig sein, Kugelpfanne und/oder Kugelzapfen mit Schlitzungen zu versehen, so daß Kugelzapfen und Kugelpfanne eine gegenüber der dargestellten Ausführungsform verbesserte «räumliche» Elastizität aufweisen, so daß einerseits im zusammengesteckten Zustand von Gelenkgliedern eine verhältnismäßig hohe Pressung zwischen Kugelpfanne und Kugelzapfen besteht, andererseits aber dennoch ein verhältnismäßig leichtes Aufstecken einer Kugelpfanne auf einen Kugelzapfen möglich ist.

Zur Begrenzung des Raumwinkels, innerhalb dessen ein Gelenkglied 1 mit seiner Kugelpfanne um den geometrischen Mittelpunkt des betreffenden anderen Gelenkgliedes 1 drehbar bzw. verschwenkbar ist, ist im Bereich der Kugelzapfen 10 an den Gelenkgliedern 1 jeweils eine Schulter 12 vorgesehen, an die sich der nicht näher bezeichnete Rand der Kugelpfanne ggfs. anlegt.

In Figur 4 ist eine unter Verwendung von Gelenkgliedern 1, Endstücken 2 und 15 sowie verschiedenen Stabgliedern 31, 32 und 33 hergestellte Montagelehre 34 gezeigt. Die Montagelehre 34 ermöglicht im gestreckten Zustand die exakte Bemessung der Länge einer Rohrleitung 35 und ermöglicht außerdem und insbesondere das Anreißen und Markieren der in vorbestimmtem Maß zu biegenden Rohrleitungsbereiche 35 und 36.

### Patentansprüche

1. Bausatz zum Herstellen einer Montagelehre für Rohrleitungen, insbesondere Rohrleitungen für hydraulische oder pneumatische Schalt- bzw. Arbeitskreise, gekennzeichnet durch

a) eine Mehrzahl von im Verhältnis zur Länge kurzen, miteinander verbundenen oder verbindbaren Gelenkgliedern (1), von denen benachbarte Gelenkglieder (1) um einen gemeinsamen geometrischen Drehpunkt jeweils innerhalb eines vorbestimmten Raumwinkels gegeneinander verstellbar und durch Klemmung in jeder möglichen relativen Position zueinander feststellbar sind,

b) weiterhin durch den Gelenkgliedern (1) zugeordnete, mit diesen verbundene oder verbindbare Endstücke (2), die mit Verbindungsmitteln für Stabglieder (3, 4) versehen sind, und

c) durch mit einer im Verhältnis zum Durchmesser um ein Mehrfaches größeren Länge ausgeführte Stabglieder (3, 4), die mit mit den Verbindungsmitteln an den Endstücken (2) korrespondierenden Verbindungsmitteln versehen sind.

2. Bausatz nach Anspruch 1, dadurch gekennzeichnet, daß die Stabglieder (3, 4) aus zwei teleskopartig ineinandergreifenden Teilen bestehen, die mittels einer Klemmeinrichtung in verschiedenen möglichen Positionen gegeneinander feststellbar sind.

3. Bausatz nach Anspruch 2, dadurch gekennzeichnet, daß die zweiteiligen Stabglieder (3, 4) aus einem stift- und einem hülsenförmigen Teil (5, 6) bestehen und daß zum gegenseitigen Feststellen von stiftförmigem und hülsenförmigem Teil (5, 6) auf dem hülsenförmigen Teil (6) eine am dem stiftförmigen Teil (5) benachbarten Ende befindliche Klemmutter (8) auf dem hülsenförmigen Teil (6) vorgesehen ist, der ein entsprechender, mit wenigstens einem in axialer Richtung verlaufenden Längsschlitz versehener Gewindebereich (9) zugeordnet ist.

4. Bausatz nach Anspruch 1, dadurch gekennzeichnet, daß die Gelenkglieder (1) Kugelzapfen (10) und Kugelpfanne (11) aufweisen, und daß zur vorbestimmten Begrenzung des möglichen Verstellwinkels dem Begrenzungsrand der Kugelpfanne (11) eine umlaufende Schulter (12) am Kugelzapfen (10) vorgesehen ist.

5. Bausatz nach Anspruch 1 und 4, dadurch gekennzeichnet, daß die Kugelpfanne (11) eines Gelenkgliedes (1) unter einer gewissen Spannung auf dem Kugelzapfen (10) des benachbarten Gelenkgliedes (1) aufsitzt.

6. Bausatz nach Anspruch 1, dadurch gekennzeichnet, daß Stabglieder (3, 4) und Endstücke (2) mit Gewindezapfen (13) bzw. Gewindebohrung (14) versehen sind.

7. Bausatz nach einem oder mehreren der vorhergehenden Ansprüche, dadurch gekennzeichnet, daß die Gelenkglieder (1) die Endstücke (2) und die ein- bzw. zweiteiligen Stabglieder (3, 4) aus Kunststoff bestehen, vorzugsweise aus Polyamid.

8. Bausatz nach Anspruch 5, dadurch gekennzeichnet, daß Kugelzapfen (10) und/oder Kugelpfanne (11) der Gelenkglieder (1) geschlitzt ausgeführt sind.

### Claims

1. Kit for producing an assembling jig for pipework, especially pipework for hydraulic or pneumatic switching or working circuits, characterised by

a) a plurality of jointed members (1) which are short in relation to the length, joined or joinable with each other, of which adjacent jointed members (1) are each displaceable against each other around a common geometrical swivelpoint within a predetermined space angle and which can be secured by clamping in any possible relative position to each other;

b) furthermore the provision of endpieces (2), appertaining to the jointed members (1) and connected or connectable therewith, and fitted with connecting means for the rod members (3, 4); and

c) rod members (3, 4) of multiple lengths relative to the diameter, which are provided with connecting means which correspond with the connecting means at the end pieces (2).

2. Kit according to claim 1, characterised in that the rod members (3, 4) are composed of two telescopically engaging parts which can be secured against each other in different possible positions by way of a clamping device.

3. Kit according to claim 2, characterised in that the two-sectional rod members (3, 4) are composed of a pin-shaped and a sleeve-shaped member (5, 6); and that for securing of pin-shaped and sleeve-shaped members (5, 6) against each other on the sleeve-shaped member (6) a securing nut is provided on the sleeve-shaped member (6) at the end adjacent to the pin-shaped member (5) which securing nut has a threaded area (9) with at least one axially orientated longitudinal slit.

4. Kit according to claim 1, characterised in that the jointed members (1) have ball journals (10) and ball cups (11) and that for pre-determined limitation of the possible angle of adjustment the limiting edge of the ball cup (11) has a peripheral shoulder (12) on the ball journal (10).

5. Kit according to claims 1 and 4, characterised in that under a certain tension the ball cup (11) of a jointed member (1) abuts against the ball journal (10) of the adjacent jointed member (1).

6. Kit according to claim 1, characterised in that the rod members (3, 4) and endpieces (2) are provided with threaded spindles (13) or tapped holes (14) respectively.

7. Kit according to one or several of the above claims, characterised in that the jointed members (1), the endpieces (2) and the one- or two-sectional rod members (3, 4) are of plastics material, preferably of polyamide.

8. Kit according to claim 5, characterised in that the ball journal (10) and/or ball cup (11) of the jointed members (1) are arranged to have a slit.

## Revendications

1. Jeu de pièces destiné à produire un gabarit de montage pour des tuyauteries, en particulier des tuyauteries pour circuits hydrauliques ou pneumatiques de commutation ou de travail, caractérisé par:

a) plusieurs éléments articulés (1) courts par rapport à la longueur et raccordés en pouvant être raccordés les uns aux autres, les éléments articulés (1) voisins pouvant être déplacés chacun l'un par rapport à l'autre à l'intérieur d'un angle solide prédéfini, autour d'un centre de rotation géométrique commun, et fixés l'un à l'autre par serrage dans n'importe quelle position relative possible,

b) des embouts (2) affectés aux éléments articulés (1), raccordés ou pouvant être raccordés à ces éléments et munis de moyens de liaison pour des barres (3, 4) et

c) des barres (3, 4) dont la longueur est un multiple du diamètre et qui sont munies de moyens de liaison correspondant aux moyens de liaison prévus sur les embouts (2).

2. Jeu de pièces selon la revendication 1, caractérisé en ce que les barres (3, 4) sont composées de deux parties qui s'emmanchent l'une dans l'autre à la façon d'un télescope et qui peuvent être fixées l'une contre l'autre dans différentes positions possibles à l'aide d'un dispositif de serrage.

3. Jeu de pièces selon la revendication 2, caractérisé en ce que les barres (3, 4) en deux parties se composent d'une partie en forme de broche et d'une partie en forme de manchon (5, 6) et en ce que, pour la fixation des parties en forme de broche et de manchon (5, 6) l'une à l'autre, la partie en forme de manchon (6) est dotée d'un écran de blocage (8) placé à son extrémité voisine de la partie en forme de broche (5), et auquel est associée une zone filetée (9) correspondante munie d'au moins une fente oblongue s'étendant dans la direction axiale.

4. Jeu de pièces selon la revendication 1, caractérisé en ce que les éléments articulés (1) présentent un pivot à rotule (10) et une coupelle de rotule (11), et en ce que pour la limitation prédéfinie de l'angle de déplacement possible par rapport au bord de limitation de la coupelle de rotule (11), il est prévu un épaulement circulaire (12) situé sur le pivot à rotule (10).

5. Jeu de pièces selon les revendications 1 et 4, caractérisé en ce que la coupelle de rotule (11) d'un élément articulé (1) est posée sous une certaine tension sur le pivot à rotule (10) de l'élément articulé (1) voisin.

6. Jeu de pièces selon la revendication 1, caractérisé en ce que les barres (3, 4) et les embouts (2) sont munis d'une goupille filetée (13) ou respectivement d'un taraudage (14).

7. Jeu de pièces selon une ou plusieurs des revendications précédentes, caractérisé en ce que les éléments articulés (1), les embouts (2) et les barres (3, 4) en une ou deux parties sont en matière plastique, de préférence en polyamide.

8. Jeu de pièces selon la revendication 5, caractérisé en ce que le pivot à rotule (10) et/ou la coupelle de rotule (11) des éléments articulés (1) sont fendus.

EP 0 168 764 B1

Fig.1

Fig.2

Fig.3

Fig.4